(19) Europäisches Patentamt
European Patent Office
Office européen des brevets

(11) **EP 4 442 899 A1**

(12) **EUROPEAN PATENT APPLICATION**
published in accordance with Art. 153(4) EPC

(43) Date of publication:
**09.10.2024 Bulletin 2024/41**

(21) Application number: **23780105.5**

(22) Date of filing: **23.03.2023**

(51) International Patent Classification (IPC):
***D06M 13/335*** *(2006.01)* ***D02G 3/44*** *(2006.01)*
***D06M 13/328*** *(2006.01)* ***D06M 13/395*** *(2006.01)*
***D06M 15/693*** *(2006.01)*

(52) Cooperative Patent Classification (CPC):
**D02G 3/44; D06M 13/328; D06M 13/335; D06M 13/395; D06M 15/693**

(86) International application number:
**PCT/JP2023/011671**

(87) International publication number:
**WO 2023/190095 (05.10.2023 Gazette 2023/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.03.2022 JP 2022061223**

(71) Applicant: **NIPPON SHEET GLASS COMPANY, LIMITED**
**Tokyo 108-6321 (JP)**

(72) Inventor: **KAWAGUCHI Satoru**
**Tokyo 108-6321 (JP)**

(74) Representative: **Cabinet Beau de Loménie**
**158, rue de l'Université**
**75340 Paris Cedex 07 (FR)**

(54) **AQUEOUS TREATMENT AGENT, MANUFACTURING METHOD FOR RUBBER REINFORCEMENT MEMBER, RUBBER REINFORCEMENT MEMBER, AND RUBBER PRODUCT**

(57) A water-based treatment agent of the present invention is a water-based treatment agent for producing a coating of a rubber-reinforcing member. The water-based treatment agent of the present invention includes: a rubber latex; and at least one selected from the group consisting of a compound A represented by the following formula (1) and a compound B represented by the following formula (2).

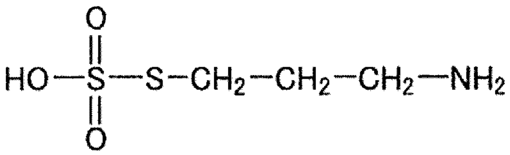

······(1)

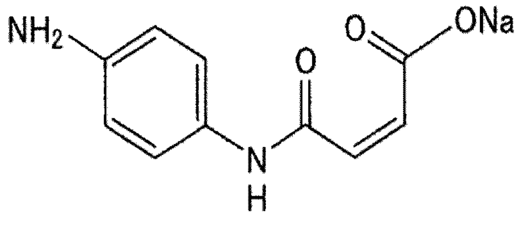

······(2)

EP 4 442 899 A1

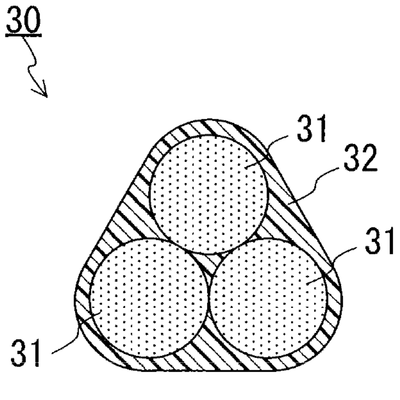


FIG.2

## Description

### TECHNICAL FIELD

The present invention relates to a water-based treatment agent for forming rubber-reinforcing members, a method for producing rubber-reinforcing members, a rubber-reinforcing member, and a rubber product.

### BACKGROUND ART

It is widely common to embed rubber-reinforcing members such as rubber-reinforcing cords and rubber-reinforcing sheets in matrix rubbers of rubber products such as rubber belts and rubber tires to improve the strength and the durability of the rubber products. For example, in rubber-reinforcing cords, glass fibers and chemical fibers are included as reinforcing fibers.

A rubber-reinforcing cord is commonly composed of a reinforcing fiber and a coating protecting a surface of the reinforcing fiber. Such a coating can improve the adhesion between the rubber-reinforcing cord and a matrix rubber when the rubber-reinforcing cord is embedded in the matrix rubber of a rubber product.

To form a coating as described above, a liquid mixture (RFL liquid) containing a resorcinol-formaldehyde condensate and a rubber latex is used, for example, as disclosed in Patent Literature 1. Coatings produced using RFL liquids can achieve strong adhesion between a matrix rubber and a rubber-reinforcing cord. Therefore, RFL liquids have been widely used as treatment agents for producing coatings of rubber-reinforcing cords.

However, rubber-reinforcing members produced without resorcinol-formaldehyde condensates and, particularly, imposing only a small environmental load on workers during the production are recently desired. One example of such a rubber-reinforcing member proposes, as disclosed in Patent Literature 2, forming a coating using a treatment agent containing a nitrile rubber-based rubber latex such as a hydrogenated nitrile rubber (H-NBR) latex and a vulcanization aid such as a maleimide crosslinking agent without using resorcinol-formaldehyde condensates.

### CITATION LIST

#### Patent Literature

Patent Literature 1: JP 2012-067412 A
Patent Literature 2: JP 2004-183121 A

### SUMMARY OF INVENTION

#### Technical Problem

As described above, exclusion of resorcinol-formaldehyde condensates from production of rubber-reinforcing members is recently required. However, because a coating produced using an RFL liquid can achieve such an excellent adhesion between a rubber-reinforcing member and a matrix rubber, it is difficult to produce a coating capable of achieving comparable adhesion without using an RFL liquid. So far, there has been proposed only one type of treatment agent with which a coating that can impart adhesion to a rubber-reinforcing member can be produced, the adhesion being comparable to that of a coating produced using an RFL liquid: that is a treatment agent containing, as disclosed in Patent Literature 2, a rubber latex and a vulcanization aid. Therefore, development of a new treatment agent with which a coating capable of achieving adhesion comparable to that of a rubber-reinforcing member including a coating produced using an RFL liquid is desired. Development of a new treatment agent will offer a wider choice of treatment agents. A wide choice of treatment agents will, for example, make it possible to select an appropriate treatment agent considering the type of matrix rubber of a rubber product, resulting in improvement of the strength of the rubber product.

It is therefore an object of the present invention to provide a new treatment agent for producing a coating of a rubber-reinforcing member, the coating being capable of achieving adhesion comparable to that of a rubber-reinforcing member including a coating produced using an RFL liquid. Another object of the present invention is to provide a rubber-reinforcing member capable of achieving adhesion comparable to that of a rubber-reinforcing member including a coating produced using an RFL liquid, along with the rubber-reinforcing member imposing only a small environmental load in the production process. Yet another object of the present invention is to provide a rubber product capable of suppressing peeling between the matrix rubber thereof and the rubber-reinforcing member thereof, along with the rubber product imposing only a small environmental load in the production process.

Solution to Problem

A first aspect of the present invention provides a water-based treatment agent for producing a coating of a rubber-reinforcing member, the water-based treatment agent including:

a rubber latex; and
at least one selected from the group consisting of a compound A represented by the following formula (1) and a compound B represented by the following formula (2):

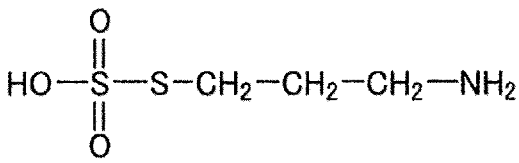

……(1)

;

and

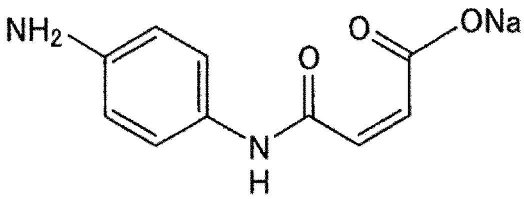

……(2)

A second aspect of the present invention provides a method for producing rubber-reinforcing members, the method including

(a) forming a first coating on a surface of a reinforcing base by providing the water-based treatment agent according to the first aspect to at least a portion of the surface of the reinforcing base and drying the water-based treatment agent.

A third aspect of the present invention is a rubber-reinforcing member for reinforcing rubber products, the rubber-reinforcing member including:

a reinforcing base; and
a first coating placed to cover at least a portion of a surface of the reinforcing base, wherein
the first coating includes a rubber component and at least one selected from the group consisting of a compound A represented by the following formula (1) and a compound B represented by the following formula (2):

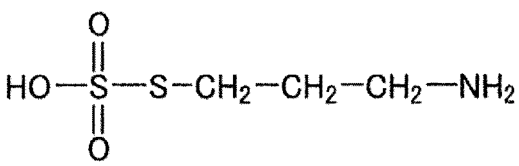

……(1)

;

and

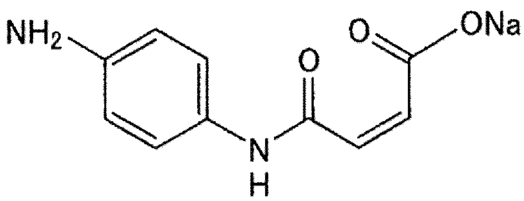

……(2)

A fourth aspect of the present invention provides a rubber product including:

a matrix rubber; and
the rubber-reinforcing member according to the third aspect.

Advantageous Effects of Invention

The present invention can provide a new treatment agent for producing a coating of a rubber-reinforcing member, the coating being capable of achieving adhesion comparable to that of a rubber-reinforcing member including a coating produced using an RFL liquid. Moreover, the present invention can provide a rubber-reinforcing member capable of achieving adhesion comparable to that of a rubber-reinforcing member including a coating produced using an RFL liquid, along with the rubber-reinforcing member imposing only a small environmental load in the production process. Furthermore, the present invention can provide a rubber product capable of suppressing peeling between the matrix rubber thereof and the rubber-reinforcing member thereof, along with the rubber product imposing only a small environmental load in the production process.

BRIEF DESCRIPTION OF DRAWINGS

FIG. 1A is a partial exploded perspective view schematically showing one example of the rubber product of the present invention.
FIG. 1B is a cross-sectional view schematically showing another example of the rubber product of the present invention.
FIG. 2 is a cross-sectional view showing a strand of Example.
FIG. 3 is a cross-sectional view showing a rubber-reinforcing cord of Example.
FIG. 4 is a cross-sectional view showing a rubber-reinforcing cord of Example including a second coating.

DESCRIPTION OF EMBODIMENTS

Hereinafter, embodiments of the present invention will be described in detail.

(First embodiment)

An embodiment of the water-based treatment agent of the present invention will be described as a first embodiment.

The water-based treatment agent of the present embodiment is a water-based treatment agent for forming a rubber-reinforcing member having a coating. That is, the water-based treatment agent of the present embodiment is a treatment agent for producing a coating of a rubber-reinforcing member. The rubber-reinforcing member is, for example, a rubber-reinforcing cord, a rubber-reinforcing sheet, or the like.

The water-based treatment agent of the present embodiment includes a rubber latex and at least one selected from the group consisting of a compound A (thiosulfuric acid S-(3-aminopropyl)) represented by the following formula (1) and a compound B ((2Z)-4-[(4-aminophenyl)amino]-4-oxo-2-butenoic acid sodium salt) represented by the following formula (2).

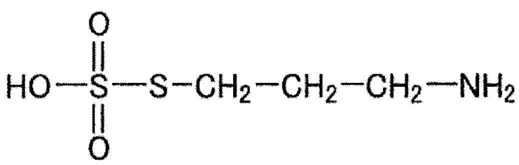

……(1)

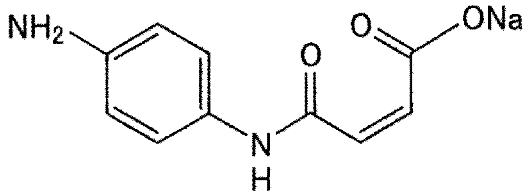

......(2)

The water-based treatment agent of the present embodiment includes at least one selected from the group consisting of the compound A and the compound B. This configuration makes it possible to produce a coating capable of achieving an excellent adhesion on a surface of a reinforcing fiber (for example, a filament bundle including a plurality of filaments, or a fiber sheet) serving as a reinforcing base using the water-based treatment agent of the present embodiment that may be free of a resorcinol-formaldehyde condensate. The adhesion achieved by the coating is so excellent that the adhesion is comparable to or higher than that of a conventional rubber-reinforcing member including a coating produced using an RFL liquid. It should be noted that the "adhesion of a rubber-reinforcing member" herein refers to the adhesion of the rubber-reinforcing member to a matrix rubber of a rubber product.

A known rubber latex conventionally included in a treatment agent for producing a coating of a rubber-reinforcing member can be used as the rubber latex. The rubber latex included in the water-based treatment agent of the present embodiment may be, for example, a latex of at least one rubber selected from the group consisting of styrene-butadiene copolymer, dicarboxylated butadiene-styrene polymer, styrene-butadiene-vinylpyridine terpolymer, chloroprene rubber, butadiene rubber, chlorosulfonated polyethylene, nitrile rubber, hydrogenated nitrile rubber, carboxyl-modified nitrile rubber, and carboxyl-modified hydrogenated nitrile rubber. The rubber latex included in the water-based treatment agent of the present embodiment may be, for example, a latex of at least one rubber selected from the group consisting of styrene-butadiene copolymer, dicarboxylated butadiene-styrene polymer, styrene-butadiene-vinylpyridine terpolymer, chloroprene rubber, butadiene rubber, and chlorosulfonated polyethylene. The rubber latex included in the water-based treatment agent of the present embodiment may be, for example, a latex of at least one rubber selected from the group consisting of styrene-butadiene copolymer, styrene-butadiene-vinylpyridine terpolymer, chloroprene rubber, and chlorosulfonated polyethylene.

In the water-based treatment agent of the present embodiment, a sum of the compound A and the compound B is preferably 15 parts by mass or less with respect to 100 parts by mass of solids included in the rubber latex. Since the sum of the compound A and the compound B is 15 parts by mass or less with respect to 100 parts by mass of the solids included in the rubber latex, the water-based treatment agent of the present embodiment can achieve an excellent adhesion of a rubber-reinforcing member and can suppress a cost increase as well. The sum of the compound A and the compound B may be 12 parts by mass or less, 5 parts by mass or less, or 3 parts by mass or less with respect to 100 parts by mass of the solids included in the rubber latex.

In the water-based treatment agent of the present embodiment, the sum of the compound A and the compound B is required to be more than 0 parts by mass, and may be 0.02 parts by mass or more, 0.1 parts by mass or more, or 0.2 parts by mass or more with respect to 100 parts by mass of the solids included in the rubber latex.

The sum of the compound A and the compound B with respect to 100 parts by mass of the solids included in the rubber latex may be adjusted in consideration of the material of a reinforcing fiber used as a reinforcing base.

For example, when a glass fiber is used as a reinforcing fiber, the sum of the compound A and the compound B is preferably 0.02 parts by mass or more and more preferably 0.1 parts by mass or more with respect to 100 parts by mass of the solids included in the rubber latex.

For example, when an aramid fiber is used as a reinforcing fiber, the sum of the compound A and the compound B is preferably more than 0.2 parts by mass and more preferably 2 parts by mass or more with respect to 100 parts by mass of the solids included in the rubber latex.

The water-based treatment agent of the present embodiment may further include a crosslinking agent. Examples of the crosslinking agent include: quinone dioxime crosslinking agents such as P-quinone dioxime; methacrylate crosslinking agents such as lauryl methacrylate and methyl methacrylate; allyl crosslinking agents such as diallyl fumarate (DAF), diallyl phthalate (DAP), triallyl cyanurate (TAC), and triallyl isocyanurate (TAIC); maleimide crosslinking agents such as bismaleimide, phenylmaleimide, and N,N'-m-phenylenedimaleimide; isocyanate compounds such as aromatic or aliphatic organic diisocyanates, polyisocyanates, blocked isocyanates, and blocked polyisocyanates; aromatic nitroso compounds; sulfur; and peroxides. These crosslinking agents may be used alone or in combination with each other. Selection from these crosslinking agents is made taking into account, for example, the type of the rubber latex included in the water-based treatment agent and the type of a matrix rubber of a rubber product in which a rubber-reinforcing member is to be embedded. These crosslinking agents are used preferably in the form of an aqueous dispersion in order to allow them to be uniformly present in the water-based treatment agent. The crosslinking agent may be at least one selected from the group consisting of maleimide crosslinking agents and isocyanate compounds. This crosslinking agent can

enhance the adhesion between a rubber-reinforcing member and a matrix rubber.

The water-based treatment agent of the present embodiment may further include a filler. Examples of the filler include: fine particles of covalent compounds such as carbon black and silica; fine particles of sparingly-soluble salts; fine particles of metal oxides; fine particles of metal hydroxides; and fine particles of complex metal oxide salts such as talc. The filler dispersed in the rubber latex exerts the effect of improving properties, such as tensile strength and tear strength, of a coating to be formed. In addition to the above effect, the filler has the effect of enhancing the cohesive force of an adhesive component and thus enhancing the bond strength between a reinforcing fiber and the coating and also between the coating and a matrix rubber.

The water-based treatment agent of the present embodiment is preferably free of a resorcinol-formaldehyde condensate. When the water-based treatment agent of the present embodiment is free of a resorcinol-formaldehyde condensate, it is unnecessary to use, in production of a rubber-reinforcing member, substances such as formaldehyde and ammonia that may impose a heavy load on the environment. Thus, no environmental measures for workers are required. Even when the water-based treatment agent of the present embodiment is free of a resorcinol-formaldehyde condensate, a coating that can achieve an excellent adhesion of a rubber-reinforcing member can be formed with the water-based treatment of the present embodiment.

The constituent components (components other than a solvent) of the water-based treatment agent of the present embodiment are dispersed or dissolved in the solvent. The solvent of the water-based treatment agent of the present embodiment is a water-based solvent containing 50 mass% or more of water. The water content in the water-based solvent may be 80 mass% or more, 90 mass% or more, or 100 mass%. Water is suitable for use as the water-based solvent because water is easy to handle, allows easy adjustment of the concentrations of the constituent components, and imposes a significantly lighter load on the environment than organic solvents. The water-based solvent may contain, for example, a lower alcohol. Examples of the lower alcohol include alcohols having 4 or less or 3 or less carbon atoms (e.g., methanol, ethanol, and propanol). It should be noted that the water-based solvent is preferably free of any organic solvent other than the lower alcohol.

In addition to the rubber latex and the compound A and/or the compound B, the water-based treatment agent of the present embodiment may further include an additional component other than the above crosslinking agent and the above filler. For example, the water-based treatment agent of the present embodiment may further include a resin, a plasticizer, an anti-aging agent, a stabilizer, or a metal oxide that does not serve as the filler.

A proportion of a sum of the solid component (namely, a rubber component) of the rubber latex, the compound A, and compound B in the constituent components (components other than the solvent) of the water-based treatment agent of the present embodiment may be 85 mass% or more, 90 mass% or more, 95 mass% or more, or 100 mass%.

(Second embodiment)

Embodiments of the rubber-reinforcing member and the rubber product of the present invention will be described as a second embodiment.

The rubber-reinforcing member of the present embodiment includes a reinforcing base and a first coating placed to cover at least a portion of a surface of the reinforcing base.

The first coating includes a rubber component and at least one selected from the group consisting of the compound A represented by the following formula (1) and the compound B represented by the following formula (2):

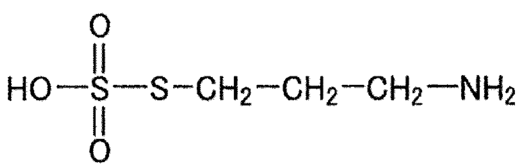

······(1)

;

and

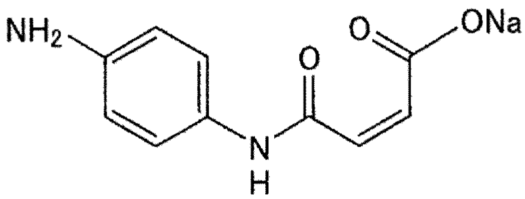

······(2)

The first coating is placed to cover at least a portion of the surface of the reinforcing base. The first coating may be placed directly on the surface of the reinforcing base, or may cover the surface of the reinforcing base with another layer interposed therebetween.

The first coating includes, as described above, the rubber component and at least one selected from the group consisting of the compound A and the compound B. Because the rubber-reinforcing member of the present embodiment includes the coating having such a configuration, the rubber-reinforcing member of the present embodiment can achieve, without a coating including a resorcinol-formaldehyde condensate, such an excellent adhesion that the adhesion is comparable to or higher than that of a rubber-reinforcing member including a coating including a resorcinol-formaldehyde condensate. That is, the rubber-reinforcing member of the present embodiment can achieve an excellent adhesion to a matrix rubber through a production process in which only a small environmental load is imposed.

A known rubber component can be used as the rubber component included in the first coating of the rubber-reinforcing member. The rubber component included in the coating of the rubber-reinforcing cord of the present embodiment may be, for example, at least one selected from the group consisting of styrene-butadiene copolymer, dicarboxylated butadiene-styrene polymer, styrene-butadiene-vinylpyridine terpolymer, chloroprene rubber, butadiene rubber, chlorosulfonated polyethylene, nitrile rubber, hydrogenated nitrile rubber, carboxyl-modified nitrile rubber, and carboxyl-modified hydrogenated nitrile rubber. The rubber component included in the first coating of the rubber-reinforcing member of the present embodiment may be, for example, at least one selected from the group consisting of styrene-butadiene copolymer, dicarboxylated butadiene-styrene polymer, styrene-butadiene-vinylpyridine terpolymer, chloroprene rubber, butadiene rubber, and chlorosulfonated polyethylene. The rubber component included in the coating of the rubber-reinforcing cord of the present embodiment may be, for example, at least one selected from the group consisting of styrene-butadiene copolymer, styrene-butadiene-vinylpyridine terpolymer, chloroprene rubber, and chlorosulfonated polyethylene.

In the first coating of the rubber-reinforcing member of the present embodiment, the sum of the compound A and the compound B is preferably 15 parts by mass or less with respect to 100 parts by mass of the rubber component. As the sum of the compound A and the compound B is 15 parts by mass or less with respect to 100 parts by mass of the rubber component, the rubber-reinforcing member of the present embodiment can achieve an excellent adhesion and can suppress a cost increase. The sum of the compound A and the compound B may be 12 parts by mass or less, 5 parts by mass or less, or 3 parts by mass or less with respect to 100 parts by mass of the rubber component.

In the first coating of the rubber-reinforcing member of the present embodiment, the sum of the compound A and the compound B is required to be more than 0 parts by mass and may be 0.02 parts by mass or more, 0.1 parts by mass or more, or 0.2 parts by mass or more with respect to 100 parts by mass of the rubber component.

The sum of the compound A and the compound B with respect to 100 parts by mass of the rubber component may be adjusted in consideration of the material of the reinforcing base (such as a reinforcing fiber).

The first coating of the rubber-reinforcing member of the present embodiment may further include a crosslinking agent. Since examples of the crosslinking agent included in the first coating and description thereof are the same as the examples of the crosslinking agent included in the water-based treatment agent in the first embodiment and the description thereof, detailed description of the crosslinking agent included in the first coating is omitted here.

The first coating of the rubber-reinforcing member of the present embodiment may further include a filler. Since examples of the filler included in the first coating and description thereof are the same as the examples of the filler included in the water-based treatment agent in the first embodiment and the description thereof, detailed description of the filler included in the first coating is omitted here.

The first coating of the rubber-reinforcing member of the present embodiment is preferably free of a resorcinol-formaldehyde condensate. When the first coating of the rubber-reinforcing member of the present embodiment is free of a resorcinol-formaldehyde condensate, it is unnecessary to use, in production of the rubber-reinforcing member, substances such as formaldehyde and ammonia that may impose a heavy load on the environment. Thus no environmental measures for workers are required. Even when the first coating of the rubber-reinforcing member is free of a resorcinol-formaldehyde condensate, the rubber-reinforcing member of the present embodiment has an excellent adhesion.

In addition to the rubber component and the compound A and/or the compound B, the first coating of the rubber-reinforcing member of the present embodiment may further include an additional component other than the above crosslinking agent and the above filler. For example, the first coating of the rubber-reinforcing member of the present embodiment may further include, for example, a resin, a plasticizer, an anti-aging agent, a stabilizer, or a metal oxide that does not serve as the filler.

A proportion of a sum of the rubber component, the compound A, and the compound B in the first coating of the rubber-reinforcing member of the present embodiment may be 85 mass% or more, 90 mass% or more, 95 mass% or more, or 100 mass%.

A mass of the first coating placed at least on the surface of the reinforcing base is not particularly limited, and may be adjusted as appropriate. For example, the first coating is preferably placed such that the mass of the first coating

is 5 mass% or more and 35 mass% or less of a mass of the reinforcing base. The mass of the first coating may be 10 mass% or more of the mass of the reinforcing base. The mass of the first coating may be 25 mass% or less or 20 mass% or less of the mass of the reinforcing base. The mass of the first coating may be 10 mass% or more and 20 mass% or less of the mass of the reinforcing base. An excessively large mass of the first coating (too large an amount of the first coating) may cause a defect such as a decrease in the dimensional stability of the rubber-reinforcing member in a rubber product or a decrease in the elastic modulus of the rubber-reinforcing member. On the other hand, an insufficiently small mass of the first coating (too small an amount of the first coating) may increase, for example, in the case where the reinforcing member is a rubber-reinforcing cord including a strand, the likelihood of fraying of the strand or may decrease the fiber protecting function of the first coating, thereby shortening the lifespan of a rubber product.

The rubber-reinforcing member of the present embodiment may or may not include an additional coating other than the first coating.

In one example, the rubber-reinforcing member of the present embodiment may further include an additional coating. For example, an additional coating (hereinafter referred to as "second coating") for improving the adhesion to a rubber product may further be formed on the surface of the rubber-reinforcing member of the present embodiment to improve the adhesion to a matrix rubber. The component of the second coating should be a substance capable of improving the adhesion to a matrix rubber. For example, a halogen-containing-polymer adhesive (for example, Chemlok manufactured by LORD Corporation), an adhesive including an H-NBR rubber and a crosslinking agent (for example, a maleimide crosslinking agent), or the like are preferably used.

The rubber-reinforcing member of the present embodiment may further include a second coating placed on the first coating, and the second coating may include a halogen-containing-polymer adhesive.

The rubber-reinforcing member of the present embodiment is, for example, a rubber-reinforcing cord or a rubber-reinforcing sheet. A rubber-reinforcing cord and a rubber-reinforcing sheet will be described hereinafter in detail as the rubber-reinforcing member.

[Rubber-reinforcing cord]

The rubber-reinforcing cord of the present embodiment is a cord for reinforcing rubber products. The rubber-reinforcing cord includes at least one strand. This strand includes at least one filament bundle (reinforcing fiber) and the first coating placed to cover at least a portion of a surface of the filament bundle. In the rubber-reinforcing cord, the filament bundle corresponds to the reinforcing base. The first coating includes, as described above, the rubber component and at least one selected from the group consisting of the compound A represented by the above formula (1) and the compound B represented by the above formula (2).

In the rubber-reinforcing cord of the present embodiment, the filament bundle composing the strand includes a plurality of filaments. The material of the filaments is not particularly limited. As the filaments of the rubber-reinforcing cord of the present embodiment, for example, glass fiber filaments, polyvinyl alcohol fiber filaments typified by vinylon fibers, polyester fiber filaments, polyamide fiber filaments such as nylon and aramid (aromatic polyamide) fibers, carbon fiber filaments, and poly(p-phenylene benzobisoxazole) (PBO) fiber filaments can be used. Among these, filaments of fibers having excellent dimensional stability, tensile strength, modulus, and bending fatigue resistance are preferably used. It is preferable to use at least one type of fiber filaments selected from, for example, glass fiber filaments, aramid fiber filaments, poly(p-phenylene benzobisoxazole) fiber filaments, and carbon fiber filaments. In particular, it is preferable to use at least one type of fiber filaments selected from glass fiber filaments, aramid fiber filaments, and carbon fiber filaments. The filament bundle may be composed of one type of filaments, or may be composed of two or more types of filaments.

The number of filaments included in the filament bundle is not particularly limited. The filament bundle can include, for example, 200 to 24000 filaments.

The surface of the filaments included in the filament bundle may be subjected to a pretreatment for increasing the bond strength. A preferred example of a pretreatment agent is a compound containing at least one functional group selected from the group consisting of an epoxy group and an amino group. Examples of the pretreatment agent include aminosilanes, epoxysilanes, novolac epoxy resins, bisphenol A epoxy resins, bisphenol F epoxy resins, brominated epoxy resins, bisphenol AD epoxy resins, and glycidyl amine epoxy resins. Specific examples include Denacol series available from Nagase ChemteX Corporation, EPICLON series available from DIC Corporation, and Epikote series available from Mitsubishi Chemical Corporation. Polyurethane resins and isocyanate compounds can also be used as the pretreatment agent. For example, a treatment agent including at least one selected from the group consisting of an epoxy resin, a urethane resin, and an isocyanate compound may be used as the pretreatment agent. By the pretreatment performed using such a treatment agent, a resin layer including at least one selected from the group consisting of an epoxy resin, a urethane resin, and an isocyanate compound is further provided between the filament bundle and the coating. The pretreatment of the surface can enhance the adhesion between a matrix rubber and the rubber-reinforcing cord also when less-adhesive fiber filaments, such as polyparaphenylene terephthalamide fiber filaments, are used. A

coating (pretreatment agent coating) made of the pretreatment agent and formed on the surfaces of the filaments by the pretreatment of the filaments is different from the coating (i.e., the coating including the rubber component and the compound A and/or the compound B), as defined in the present embodiment, covering at least a portion of the surface of the filament bundle, and is not included in the coating defined in the present embodiment.

The number of filament bundles included in the rubber-reinforcing cord is not limited, and may be one or may be two or more. The filament bundle may be a bundle of a plurality of filament bundles. In this case, each of the plurality of filament bundles may be twisted or may not be twisted. The plurality of filament bundles may be twisted together as one bundle or may not be twisted together as one bundle. The number of twists given to the filament bundle is not particularly limited. The number of twists given to one filament bundle (such twists may hereinafter be referred to as "primary twists") may be, for example, 1 to 6 twists/25 mm. The number of twists given to the plurality of filament bundles (such twists may hereinafter be referred to as "final twists") may be, for example, 1 to 8 twists/25 mm. Lang lay may be employed in which the direction of primary twists and the direction of final twists are the same, or regular lay may be employed in which the direction of primary twists and the direction of final twists are opposite. The directions of the twists are not limited and may be the S direction or the Z direction.

The first coating is placed to cover at least a portion of the surface of the filament bundle. The first coating may be placed directly on the surface of the filament bundle or may cover the surface of the filament bundle with another layer interposed therebetween.

The first coating includes, as described above, the rubber component and at least one selected from the group consisting of the compound A and the compound B. Because the rubber-reinforcing cord of the present embodiment includes the coating having such a configuration, the rubber-reinforcing cord of the present embodiment can achieve, without a coating including a resorcinol-formaldehyde condensate, such an excellent adhesion that the adhesion is comparable to or higher than that of a rubber-reinforcing cord including a coating including a resorcinol-formaldehyde condensate. That is, the rubber-reinforcing cord of the present embodiment can achieve an excellent adhesion to a matrix rubber through a production process in which only a small environmental load is imposed.

In the first coating, the sum of the compound A and the compound B with respect to 100 parts by mass of the rubber component may be adjusted in consideration of the material of the filaments included in the filament bundle.

For example, in the case where the filament bundle includes glass fiber filaments, the sum of the compound A and the compound B is preferably 0.02 parts by mass or more and more preferably 0.1 parts by mass or more with respect to 100 parts by mass of the rubber component in the first coating.

For example, in the case where the filament bundle includes aramid fiber filaments, the sum of the compound A and the compound B is preferably more than 0.2 parts by mass and more preferably 2 parts by mass or more with respect to 100 parts by mass of the rubber component in the first coating.

The rubber-reinforcing cord of the present embodiment may or may not include an additional coating other than the above first coating. It should be noted that, as described above, the "additional coating" does not include the above-described pretreatment agent coating. Thus, a rubber-reinforcing cord including the first coating on the surface of the filament bundle including the filaments having the pretreatment agent coating thereon can be a "rubber-reinforcing cord not including an additional coating other than the first coating".

In one example, the rubber-reinforcing cord of the present embodiment may include an additional coating. For example, the second coating, which is an additional coating for improving the adhesion to a rubber product, may be formed on the surface of the rubber-reinforcing cord of the present embodiment to improve the adhesion to a matrix rubber. To improve the adhesion to a matrix rubber, the second coating may be formed on the surface of the cord given final twists. As described above, the component of the second coating should be a substance capable of improving the adhesion to a matrix rubber. For example, a halogen-containing-polymer adhesive (for example, Chemlok manufactured by LORD Corporation), an adhesive including an H-NBR rubber and a crosslinking agent (for example, a maleimide crosslinking agent), or the like is preferably used.

The number of twists given to the rubber-reinforcing cord of the present embodiment is not particularly limited. The number of twists given to one strand (such twists may hereinafter be referred to as "primary twists") may be, for example, 1 to 6 twists/25 mm. The number of twists given to a plurality of the strands (such twists may hereinafter be referred to as "final twists") may be, for example, 1 to 8 twists/25 mm. Lang lay may be employed in which the direction of primary twists and the direction of final twists are the same, or regular lay may be employed in which the direction of primary twists and the direction of final twists are opposite. The directions of the twists are not limited and may be the S direction or the Z direction.

[Rubber-reinforcing sheet]

The rubber-reinforcing sheet of the present embodiment is a sheet for reinforcing rubber products. The rubber-reinforcing sheet includes a fiber sheet being a reinforcing base and the first coating formed on the fiber sheet. In the rubber-reinforcing sheet, the fiber sheet corresponds to the reinforcing base. The first coating includes, as described

above, the rubber component and at least one selected from the group consisting of the compound A represented by the above formula (1) and the compound B represented by the above formula (2).

The first coating of the rubber-reinforcing sheet of the present embodiment is the same as the coating of the above rubber-reinforcing cord of the present embodiment. Therefore, detailed description of the coating of the rubber-reinforcing sheet is omitted here.

The fiber sheet being a reinforcing base is a sheet made of a reinforcing fiber. The reinforcing fiber is not particularly limited as long as the reinforcing fiber enhances the shape stability and the strength of the reinforcing fiber sheet. For example, a glass fiber, a polyvinyl alcohol fiber typified by a vinylon fiber, a polyester fiber, a polyamide fiber such as nylon or aramid (aromatic polyamide), a carbon fiber, a poly(p-phenylene benzoxazole) fiber, or the like can be used. A preferred example of the fiber sheet is obtained by weaving nylon fibers into a sheet shape. These fibers may be used alone, or may be used in combination. Additionally, the shape of the fiber sheet is not limited as long the fiber sheet is in a sheet shape. The fiber sheet may be a woven fabric or a non-woven fabric.

For example, the description of the rubber-reinforcing sheet disclosed in JP 2006-144932 A can be employed for details of the rubber-reinforcing sheet of the present embodiment, such as the shape of the rubber-reinforcing sheet and specific examples of the fiber sheet, except for the coating. Thus, detailed description of the configuration, such as the fiber sheet, except for the coating is omitted here.

[Method for producing rubber-reinforcing members]

One example of the method for producing the rubber-reinforcing member of the present embodiment (hereinafter referred to as "the production method of the present embodiment") will be hereinafter described. The matters specified above for the water-based treatment agent of the first embodiment and the rubber-reinforcing member, the rubber-reinforcing cord, and the rubber-reinforcing sheet of the present embodiment are applicable to the following production method, and redundant descriptions of the matters may thus be omitted. The matters specified for the following production method of the present embodiment are applicable to the water-based treatment agent of the first embodiment and the rubber-reinforcing member, the rubber-reinforcing cord, and the rubber-reinforcing sheet of the present embodiment as well.

The production method of the present embodiment includes

(a) forming the first coating on a surface of a reinforcing base by providing a treatment agent to at least a portion of the surface of the reinforcing base and drying the treatment agent.

The treatment agent is the water-based treatment agent of the first embodiment.

In the case of using a filament bundle as the reinforcing base in the production method of the present embodiment, a rubber-reinforcing cord can be produced by the production method of the present embodiment. For example, in the case where a reinforcing fiber is a filament bundle in the production method of the present embodiment, the production method of the present embodiment further includes, for example,

(b) producing at least one of the filament bundles by assembling a plurality of filaments. In this case, in the above step (a), a strand including the filament bundle and the first coating on the surface of the filament bundle is produced by providing the water-based treatment agent to at least the portion of the surface of the filament bundle and drying the water-based treatment agent.

In the case of producing a rubber-reinforcing member including an additional coating (namely, the second coating) on the first coating, the production method of the present embodiment may further include forming the second coating in the following steps: A treatment agent for formation of the second coating is provided to the reinforcing base on which the first coating is formed, and then the treatment agent for formation of the second coating is dried. For example, in the case where the second coating includes a halogen-containing-polymer adhesive, the production method of the present embodiment may further include, for example,

(c) forming the second coating by providing a halogen-containing-polymer adhesive to the reinforcing base on which the first coating is formed and drying the halogen-containing-polymer adhesive.

A rubber-reinforcing member including the second coating can be formed thereby.

In the case of producing a rubber-reinforcing cord by the production method of the present embodiment, the production method of the present embodiment includes: producing at least one filament bundle by assembling a plurality of filaments; and forming a strand by providing a treatment agent to at least a portion of a surface of the filament bundle and drying the treatment agent, the strand including the filament bundle and a coating on the surface of the filament bundle. The treatment agent is the water-based treatment agent of the first embodiment.

By the above method, the first coating is formed on at least the portion of the surface of the reinforcing base. The method for providing the water-based treatment agent to at least the portion of the surface of the reinforcing base is not limited. For example, the water-based treatment agent may be applied onto the surface of the reinforcing base,

or the reinforcing base may be immersed in the water-based treatment agent.

Drying conditions, i.e., conditions under which a heating treatment for removing the solvent of the water-based treatment agent is performed are not particularly limited. In one example, the drying may be performed in an atmosphere at 80°C to 280°C for 0.1 to 2 minutes.

The water-based treatment agent is preferably provided to at least the portion of the surface of the reinforcing base such that the mass of the first coating is 5 mass% or more and 35 mass% or less of a mass of the reinforcing base. The water-based treatment agent may be provided to at least the portion of the surface of the reinforcing base such that the mass of the first coating is 10 mass% or more of the mass of the reinforcing base. The water-based treatment agent may be provided to at least the portion of the surface of the reinforcing base such that the mass of the first coating is 25 mass% or less or 20 mass% or less of the mass of the reinforcing base. The water-based treatment agent may be provided to at least the portion of the surface of the reinforcing base such that the mass of the first coating is 10 mass% or more and 20 mass% or less of the mass of the reinforcing base.

In the case of producing a rubber-reinforcing cord by the production method of the present embodiment, specifically, in the case of using a filament bundle as the reinforcing base, the filament bundle having the first coating thereon may be twisted in one direction. The direction of twisting may be the S direction or the Z direction. The number of filaments included in the filament bundle and the number of twists given to the filament bundle are as specified above and thus will not be repeatedly described. The rubber-reinforcing cord of the present embodiment can be produced in this manner. A plurality of the filament bundles each having the first coating thereon may be formed, assembled together, and given final twists. The direction of the final twists may be the same as or different from the direction of the twists of each filament bundle (the direction of the primary twists). Alternatively, a plurality of the filament bundles each having the first coating thereon and not twisted each may be formed, assembled together, and given twists.

The first coating may be formed after the filament bundle is twisted. The type of filaments, the number of filaments, and the number of twists given to the filaments are as described above.

A plurality of strands produced as described above may be prepared and twisted together. That is, the production method of the present embodiment may further include twisting a plurality of strands together.

In a preferred example of the production method of the present embodiment, the rubber-reinforcing cord is formed by twisting the filament bundle in one direction after applying the water-based treatment agent to the filament bundle or immersing the filament bundle in the water-based treatment agent.

In the case of producing a rubber-reinforcing member in which an additional coating (namely, the second coating) is placed nearer to the outer side than the above first coating, the rubber-reinforcing cord including the second coating may be formed, for example, by the following method. The method may include providing the treatment agent for forming the second coating to a cord including a plurality of the strands twisted together and drying the treatment agent on the cord.

In the case of producing a rubber-reinforcing sheet by the production method of the present embodiment, specifically, in the case of using a fiber sheet as the reinforcing base, the first coating is formed in one example of the method for producing the rubber-reinforcing member of the present embodiment. In the example of the method, the reinforcing base is a fiber sheet and, in the above step (a), the first coating is formed on the fiber sheet by providing the water-based treatment agent to at least the portion of the surface of the fiber sheet and drying the water-based treatment agent.

The method for providing the water-based treatment agent to the fiber sheet is not limited to a particular method. For example, the coating can be formed by immersing the fiber sheet in a bath containing the water-based treatment agent, pulling the fiber sheet out of the bath, and then removing the solvent from the fiber sheet by a drying oven. The rubber-reinforcing sheet production method disclosed in a prior art document, for example, JP 2006-144932 A except for the components of the water-based treatment agent may be employed for the rubber-reinforcing sheet production method of the present embodiment.

[Rubber product]

The rubber product of the present embodiment includes a matrix rubber and the above-described rubber-reinforcing member of the present embodiment. In other words, the rubber product of the present embodiment is a rubber product reinforced with at least one reinforcing member selected from the group consisting of the rubber-reinforcing cord of the present embodiment and the rubber-reinforcing sheet of the present embodiment. The rubber product is not limited to a particular type. Examples of the rubber product of the present embodiment include tires of automobiles or bicycles and transmission belts. Examples of the transmission belts include synchronous transmission belts and friction transmission belts. Examples of the synchronous transmission belts include toothed belts typified by timing belts for automobiles. Examples of the friction transmission belts include flat belts, round belts, V belts, and V-ribbed belts. That is, the rubber product of the present embodiment may be a toothed belt, a flat belt, a round belt, a V belt, or a V-ribbed belt. The rubber product of the present embodiment may be a hose for home use, industrial use, automotive use, or agricultural

use.

The rubber product of the present embodiment may be formed, for example, by embedding the rubber-reinforcing cord of the present embodiment in a rubber composition (matrix rubber). That is, an example of the rubber product of the present embodiment includes, for example, a matrix rubber and a rubber-reinforcing cord embedded in the matrix rubber. The technique for embedding the rubber-reinforcing cord in the matrix rubber is not particularly limited, and a commonly-known technique may be employed. The rubber-reinforcing cord of the present embodiment is embedded, for example, in the rubber product (e.g., a rubber belt) of the present embodiment. This allows the rubber product of the present embodiment to have such an excellent adhesion that the matrix rubber and the rubber-reinforcing cord are strongly adhered to each other and to achieve a high mechanical strength. The rubber product of the present embodiment is particularly suitable for, for example, a timing belt of a vehicle engine and a belt for driving an accessory of a vehicle.

The rubber product of the present embodiment may have a configuration, for example, in which the rubber-reinforcing sheet of the present embodiment is embedded in a rubber body (a member made of the matrix rubber) of the rubber product or in which the rubber-reinforcing sheet of the present embodiment is disposed to cover a surface of the rubber body.

The matrix rubber in the rubber product of the present embodiment is not particularly limited. It may be chloroprene rubber, chlorosulfonated polyethylene rubber, ethylene propylene rubber (EPDM), hydrogenated nitrile rubber, carboxyl-modified nitrile rubber, carboxyl-modified hydrogenated nitrile rubber, natural rubber, or styrene-butadiene rubber (namely, styrene-butadiene copolymer). The hydrogenated nitrile rubber may be a hydrogenated nitrile rubber in which a zinc acrylate derivative (e.g., zinc methacrylate) is dispersed. Chloroprene rubber, EPDM, hydrogenated nitrile rubber, carboxyl-modified nitrile rubber, carboxyl-modified hydrogenated nitrile rubber, natural rubber, and styrene-butadiene rubber are preferred as the rubber included in the rubber composition in which the rubber-reinforcing cord of the present embodiment is to be embedded. Chloroprene rubber is a rubber excellent in mechanical strength, weather resistance, chemical resistance, heat resistance, cold resistance, and oil resistance. Additionally, chloroprene rubber has a lot of features, such as flame retardancy, a small gas permeability, and a high adhesion force (in the form of a rubber cement). Therefore, chloroprene rubber is preferred as a matrix rubber of rubber products for such properties.

The matrix rubber in the rubber product of the present embodiment may include, for example, at least one selected from the group consisting of chloroprene rubber, nitrile rubber, hydrogenated nitrile rubber, carboxyl-modified nitrile rubber, and carboxyl-modified hydrogenated nitrile rubber.

In the case where the rubber-reinforcing member includes the second coating and the second coating includes a halogen-containing-polymer adhesive, the matrix rubber in the rubber product of the present embodiment may include at least one selected from the group consisting of nitrile rubber, hydrogenated nitrile rubber, carboxyl-modified nitrile rubber, and carboxyl-modified hydrogenated nitrile rubber. The rubber-reinforcing member of the present embodiment having the second coating including a halogen-containing-polymer adhesive bears an excellent adhesion to the matrix rubber including nitrile rubber, hydrogenated nitrile rubber, carboxyl-modified nitrile rubber, and/or carboxyl-modified hydrogenated nitrile rubber.

FIG. 1A shows a toothed belt as one example of the rubber product. A toothed belt 10 shown in FIG. 1A includes a belt body 11 and a plurality of rubber-reinforcing cords 12. The belt body 11 includes a belt portion 13 and a plurality of tooth portions 14 protruding from the belt portion 13 at fixed intervals. The rubber-reinforcing cords 12 are embedded in the belt portion 13 so as to extend parallel to the longitudinal direction of the belt portion 13. Each rubber-reinforcing cord 12 is the rubber-reinforcing cord of the present embodiment.

FIG. 1B shows a toothed belt as another example of the rubber product. A toothed belt 20 shown in FIG. 1B includes a belt body 21 and a rubber-reinforcing sheet 22. The belt body 21 includes a belt portion 23 and a plurality of tooth portions 24 protruding from the belt portion 23 at fixed intervals. The rubber-reinforcing sheet 22 is disposed to cover a surface of the belt body 21, the surface having the tooth portions 24 thereon. As shown in FIG. 1B, for example, a rubber-reinforcing cord 25 may be embedded in the belt portion 23. The rubber-reinforcing sheet 22 is the rubber-reinforcing sheet of the present embodiment. The rubber-reinforcing cord 25 is the rubber-reinforcing cord of the present embodiment. The rubber-reinforcing cord 25 may be excluded and only the rubber-reinforcing sheet 22 may be provided as the rubber-reinforcing member in the toothed belt 20. Alternatively, the rubber-reinforcing sheet 22 may be provided, as the rubber-reinforcing member in the toothed belt 20, in the belt portion 23 in place of the rubber-reinforcing cord 25.

## EXAMPLES

Hereinafter, the embodiments of the present invention will be described in more detail by way of Examples and Comparative Examples.

[Production of rubber-reinforcing cord]

(Examples 1 to 21, Comparative Example 1)

A glass fiber (filament bundle) composed of a bundle of 200 glass filaments (E-glass composition; average diameter: 9 μm) was prepared. Three such glass fibers were aligned, and a water-based treatment agent containing components as shown in Tables 1 to 4 below was applied thereto. After that, the water-based treatment agent was dried in a drying oven at 250°C for 1 minute. A strand was formed in this manner. It should be noted that in Tables, "SBVP latex" represents a styrene-butadiene-vinylpyridine terpolymer latex, "SBR latex" represents a styrene-butadiene copolymer latex, "CSM latex" represents a chlorosulfonated polyethylene latex, and "CR latex" represents a chloroprene latex.

The strand formed had a cross-section as shown in FIG. 2. That is, a strand 30 was formed in which a first coating 32 was placed to cover surfaces of the three bundles of glass fibers (filament bundles) 31 each including a number of glass filaments. The three glass fibers 31 were bonded by the first coating 32. The thus-obtained strand was given primary twists (Z twists) at 2 twists/25 mm. Then, six such strands each given primary twists were aligned and given final twists (S twists) at 2 twists/25 mm. A rubber-reinforcing cord 40 having a cross-section as shown in FIG. 3 was obtained in this manner. It should be noted that the mass of the coatings in the cord was 13.1 to 18.3 mass% with respect to the mass of the filament bundles. The mass of the coatings with respect to the mass of the filament bundles was determined by ignition loss. Reinforcing cords of Examples 1 to 21 were obtained in this manner.

As described above, the mass of the coatings with respect to the mass of the filament bundles was determined by ignition loss. Specifically, each specimen of the coated filament bundles was first measured for the mass, and was then heated for 15 minutes or longer in an electric furnace maintained at 650±20°C. After that, the specimen was cooled to room temperature, and the mass thereof was measured. The mass of the coatings with respect to the mass of the filament bundles, which is represented by "Deposit ratio of coating" in Table 1, was determined using the following equation.

$$\text{Deposit ratio of coating (\%)} = 100 \times (a - b)/b$$

a: The mass (g) before the heating
b: The mass (g) after the heating

(Examples 22 to 25)

A thousand aramid fiber filaments were assembled into a filament bundle. Technora 1670dtex manufactured by TEIJIN LIMITED was used as the aramid fiber filament.

A water-based treatment agent containing components as shown in Table 5 below was applied to one aramid fiber filament bundle. After that, the water-based treatment agent was dried in a drying oven at 250°C for 1 minute. A strand was formed in this manner. It should be noted that in Table, "SBVP latex" represents a styrene-butadiene-vinylpyridine terpolymer latex, and "SBR latex" represents a styrene-butadiene copolymer latex.

Primary twists (Z twists) were given to the thus-obtained strand at 2 twists/25 mm. Then, two such strands each given primary twists were aligned and given final twists (S twists) at 2 twists/25 mm. A rubber-reinforcing cord was obtained in this manner. It should be noted that the mass of the coatings in the cord was 14.4 to 24.1 mass% with respect to the mass of the filament bundles. Reinforcing cords of Examples 22 to 25 were obtained in this manner.

(Examples 26 to 29)

A glass fiber (filament bundle) composed of a bundle of 200 glass filaments (E-glass composition; average diameter: 9 μm) was prepared. Three such glass fibers were aligned, and a water-based treatment agent containing components as shown in Table 6 below was applied thereto. After that, the water-based treatment agent was dried for 1 minute in a drying oven at 280°C for Examples 26 and 28 and at 300°C for Examples 27 and 29. A strand was formed in this manner. It should be noted that in Table, "SBVP latex" represents a styrene-butadiene-vinylpyridine terpolymer latex, "SBR latex" represents a styrene-butadiene copolymer latex, and "CSM latex" represents a chlorosulfonated polyethylene latex.

The strand formed had a cross-section as shown in FIG. 2. That is, the strand 30 was formed in which the first coating 32 was placed to cover surfaces of the three bundles of the glass fibers (filament bundles) 31 each including a number of glass filaments. The three glass fibers 31 were bonded by the first coating 32. The thus-obtained strand was given primary twists (Z twists) at 2 twists/25 mm. Then, six such strands each given primary twists were aligned and given final twists (S twists) at 2 twists/25 mm. The rubber-reinforcing cord 40 having a cross-section as shown in FIG.

3 was obtained in this manner. It should be noted that the mass of the first coatings of the cord was 15.3 to 17.4 mass% with respect to the mass of the filament bundles. The mass of the first coatings with respect to the mass of the filament bundles was determined by ignition loss.

Next, an additional coating (corresponding to the second coating) was formed on a surface of the rubber-reinforcing cord 40 formed in the above manner. The second coating was formed by applying a solution to the surface of the rubber-reinforcing cord 40 and drying the applied solution by heating at 115°C. The solution was obtained by diluting Chemlok 233 (solids: 23.5 mass%), which was a halogen-containing-polymer adhesive with xylene, manufactured by LORD Corporation. A rubber-reinforcing cord 50 of each of Examples 26 to 29 was obtained in this manner. The rubber-reinforcing cord 50 included a second coating 51 and had a cross-section as shown in FIG. 4. For each of these cords, the mass percentage of the second coating with respect to the mass of the filament bundles (namely, a deposit ratio of the second coating) is shown in Table 6. The mass percentage of the second coating with respect to the mass of the filament bundles was determined by the following method. The mass of the coatings in the rubber-reinforcing cord including the second coating (i.e., the sum of the mass of the first coatings and the mass of the second coating) was determined by the above-described method by which the mass of the first coatings was determined. From the obtained mass of the coatings in the rubber-reinforcing cord including the second coating was subtracted the mass of the first coatings before the formation of the second coating, and the resulting value was defined as the mass of the second coating. The mass of the second coating was used to determine the mass percentage of the second coating with respect to the mass of the filament bundles. This is interpreted as follows: the mass percentage of the coatings after the second coating formation process - the mass percentage of the first coatings = the mass percentage of the second coating.

[Adhesion evaluation (bond strength to matrix rubber and type of failure)]

(Examples 1 to 25, Comparative Example 1)

Two pieces of rubber (25 mm in width × 50 mm in length × 5 mm in thickness) having the composition shown in Table 7 were prepared. Next, a plurality of the rubber-reinforcing cords were arranged parallel to the longitudinal direction of the rubber pieces without a space between the rubber-reinforcing cords, and were then sandwiched by the two rubber pieces. In Examples and Comparative Example, about 30 rubber-reinforcing cords were arranged in parallel on the rubber piece having a width of 25 mm. The rubber-reinforcing cords sandwiched by the two rubber pieces were heated at 165°C for 30 minutes to adhere the rubber pieces and the rubber-reinforcing cords. For the thus-obtained specimen, the adhesion between the rubber-reinforcing cords and the matrix rubber (namely, the rubber pieces) was evaluated by a 180-degree peel test. Specifically, using a tensile tester, one of the rubber pieces of the specimen was held by one chuck of the tensile tester, and the other rubber piece of the specimen and the plurality of parallel rubber-reinforcing cords were held by the other chuck. Then, the specimen was pulled in the longitudinal direction so that the direction of peeling would be at 180 degrees to the adhesion interface. The tensile speed was 50 mm/min. The measured peeling strength between the matrix rubber and the rubber-reinforcing cord of each of the Examples and Comparative Example was defined as bond strength. The peeling strength was the average value of the maximum of a peeling force and the minimum thereof (the value obtained by adding the maximum and the minimum and dividing the sum by 2).

The peeling test for adhesion evaluation was performed for the specimens produced in the above manner the day after the production of the specimens (initial bond strength) and one week after the production of the specimens (one-week-later bond strength).

It was also examined whether the failure type of the specimen was "rubber failure" which occurred with the rubber-reinforcing cord and the matrix rubber remained adhered, "interfacial peeling" which occurred at the interface between the matrix rubber and the rubber-reinforcing cord, or "spot" which is intermediate between "rubber failure" and "interfacial peeling". More specifically, the term "rubber failure" refers to a type of failure in which a crack appears within the matrix rubber without peeling at the interface between the matrix rubber and the rubber-reinforcing cord and in which 90% or more of the surface of the rubber-reinforcing cord is covered by the matrix rubber at the peeling interface. The term "spot" refers to a state where 20% or more and less than 90% of the surface of the rubber-reinforcing cord is covered by the matrix rubber at the peeling interface. The term "interfacial peeling" refers to a type of failure in which peeling occurs between the matrix rubber and the rubber-reinforcing cord without rubber failure and in which the percentage of broken rubber present at the surface of the peeled rubber-reinforcing cord is less than 20%.

The percentage of rubber present at the peeling interface was determined using a printed image of a photograph of the peeling interface. Specifically, first, a photograph of the entire peeling interface of the specimen was taken. A portion corresponding to the whole specimen was cut out from a printed image of the photograph, and the weight W of the cut-out printed image of the whole specimen was measured. Next, a portion corresponding to the rubber was cut out from the printed image of the whole specimen, and the weight w of the whole cut-out portion corresponding to the rubber was measured. Using the measured values of the weights W and w, the percentage of the remaining rubber was determined ((w/W) × 100%).

(Examples 26 to 29)

The adhesion evaluation was performed in the same manner as for Examples 1 to 25 and Comparative Example 1, except that the composition of the rubber pieces used was changed to the composition shown in Table 8. As to the rubber-reinforcing cords of Examples 26 to 29, the peeling test for adhesion evaluation was performed only the day after the production of the specimens (initial bond strength).

Tables 1 to 6 show the results of the adhesion evaluation for the rubber-reinforcing cords of Examples and Comparative Example.

[Table 1]

| | | Example | | | |
|---|---|---|---|---|---|
| | | 1 | 2 | 3 | 4 |
| Components of water-based treatment agent and total amount (parts by mass) | SBVP latex (Solids: 42 mass%) (*1) | 70.0 | 70.0 | 70.0 | 70.0 |
| | SBR latex (Solids: 49 mass%) (*2) | 30.0 | 30.0 | 30.0 | 30.0 |
| | Blocked isocyanate (Solids: 42 mass%) (*3) | 15.0 | 7.5 | 2.0 | - |
| | Compound A (*4) | - | - | - | - |
| | Compound B (*5) | 2.0 | 1.0 | 1.0 | 1.0 |
| | RF condensate (*6) | - | - | - | - |
| | Water | 63.0 | 71.5 | 77.0 | 79.0 |
| | Total amount | 180 | 180 | 180 | 180 |
| Compound A + compound B with respect to 100 parts by mass of solids in rubber latex | | 4.5 | 2.3 | 2.3 | 2.3 |
| Material of filament in rubber-reinforcing cord | | Glass fiber | Glass fiber | Glass fiber | Glass fiber |
| Deposit ratio of first coating (mass%) | | 18.0 | 15.6 | 16.8 | 13.1 |
| Adhesion evaluation | Initial bond strength (N/25 mm) | 248 | 251 | 247 | 245 |
| | One-week-later bond strength (N/25 mm) | 245 | 246 | 250 | 242 |
| | Initial failure type | Rubber failure | Rubber failure | Rubber failure | Rubber failure |
| | One-week-later failure type | Rubber failure | Rubber failure | Rubber failure | Rubber failure |

(*1) PYRATEX (manufactured by NIPPON A&L INC.)

(*2) Asahi Kasei SB latex L-7532 (manufactured by Asahi Kasei Corporation)

(*3) DM-6400 (manufactured by Meisei Chemical Works, Ltd.)

(*4) SUMILINK 100 (manufactured by Sumitomo Chemical Co., Ltd.)

(*5) SUMILINK 200 (manufactured by Sumitomo Chemical Co., Ltd.)

(*6) SUMIKANOL (manufactured by Sumitomo Chemical Co., Ltd.)

[Table 2]

| | | Example | | | | | | | |
|---|---|---|---|---|---|---|---|---|---|
| | | 5 | 6 | 7 | 8 | 9 | 10 | 11 | 12 |
| Components of water-based treatment agent and total amount (parts by mass) | SBVP latex (Solids: 42 mass%) (*1) | 70.0 | 70.0 | 70.0 | 70.0 | 70.0 | 70.0 | 70.0 | 70.0 |
| | SBR latex (Solids: 49 mass%) (*2) | 30.0 | 30.0 | 30.0 | 30.0 | 30.0 | 30.0 | 30.0 | 30.0 |
| | Blocked isocyanate (Solids: 42 mass%) (*3) | - | - | - | - | - | - | - | - |
| | Compound A (*4) | - | - | - | - | - | - | - | - |
| | Compound B (*5) | 1.0 | 0.5 | 0.3 | 0.1 | 0.1 | 0.07 | 0.04 | 0.01 |
| | RF condensate (*6) | - | - | - | - | - | - | - | - |
| | Water | 49.0 | 49.5 | 49.7 | 49.9 | 50.0 | 50.0 | 50.0 | 50.0 |
| | Total amount | 150 | 150 | 150 | 150 | 150 | 150 | 150 | 150 |
| Compound A + compound B with respect to 100 parts by mass of solids in rubber latex | | 2.3 | 1.1 | 0.68 | 0.23 | 0.23 | 0.16 | 0.09 | 0.023 |
| Material of filament | | Glass fiber | Glass fiber | Glass fiber | Glass fiber | Glass fiber | Glass fiber | Glass fiber | Glass fiber |
| Deposit ratio of first coating (mass%) | | 18.1 | 16.8 | 18.3 | 17.1 | 16.5 | 18.5 | 15.4 | 15.6 |
| Adhesion evaluation | Initial bond strength (N/25 mm) | 285 | 279 | 280 | 289 | 291 | 314 | 296 | 303 |
| | One-week-later bond strength (N/25 mm) | 296 | 299 | 298 | 297 | 297 | 306 | 301 | 304 |
| | Initial failure type | Rubber failure | Rubber failure | Rubber failure | Rubber failure | Rubber failure | Rubber failure | Rubber failure | Rubber failure |
| | One-week-later failure type | Rubber failure | Rubber failure | Rubber failure | Rubber failure | Rubber failure | Rubber failure | Rubber failure | Rubber failure |

(*1) PYRATEX (manufactured by NIPPON A&L INC.)

(*2) Asahi Kasei SB latex L-7532 (manufactured by Asahi Kasei Corporation)

(*3) DM-6400 (manufactured by Meisei Chemical Works, Ltd.)

(*4) SUMILINK 100 (manufactured by Sumitomo Chemical Co., Ltd.)

(*5) SUMILINK 200 (manufactured by Sumitomo Chemical Co., Ltd.)

(*6) SUMIKANOL (manufactured by Sumitomo Chemical Co., Ltd.)

[Table 3]

| | | Example | | | | | | | | |
|---|---|---|---|---|---|---|---|---|---|---|
| | | 13 | 14 | 15 | 16 | 17 | 18 | 19 | 20 | 21 |
| Components of water-based treatment agent and total amount (parts by mass) | SBVP latex (Solids: 42 mass%) (*1) | 70.0 | 70.0 | 70.0 | 70.0 | 70.0 | 70.0 | 70.0 | 70.0 | 70.0 |
| | SBR latex (Solids: 49 mass%) (*2) | 30.0 | 30.0 | 30.0 | 30.0 | 30.0 | - | - | - | - |
| | CSM latex (Solids: 40 mass%) (*7) | - | - | - | - | - | - | 37.0 | 37.0 | 37.0 |
| | CR latex (Solids: 50 mass%) (*8) | - | - | - | - | - | 26.5 | - | - | - |
| | Blocked isocyanate (Solids: 42 mass%) (*3) | - | - | - | - | - | - | - | - | - |
| | Compound A (*4) | 1.0 | 0.5 | 0.1 | 0.05 | 0.01 | - | - | 0.5 | - |
| | Compound B (*5) | - | - | - | - | - | 1.0 | 0.5 | - | 0.1 |
| | RF condensate (*6) | - | - | - | - | - | - | - | - | |
| | Water | 49.0 | 50.0 | 50.0 | 50.0 | 50.0 | 82.5 | 43.3 | 43.3 | 43.3 |
| | Total amount | 150 | 150 | 150 | 150 | 150 | 180 | 150 | 150 | 150 |
| Compound A + compound B with respect to 100 parts by mass of solids in rubber latex | | 2.3 | 1.1 | 0.23 | 0.11 | 0.023 | 2.3 | 1.1 | 1.1 | 0.23 |
| Material of filament | | Glass fiber | Glass fiber | Glass fiber | Glass fiber | Glass fiber | Glass fiber | Glass fiber | Glass fiber | Glass fiber |
| Deposit ratio of first coating (mass%) | | 17.3 | 17.3 | 16.6 | 16.7 | 16.5 | 17.3 | 16.7 | 18.2 | 18.1 |
| Adhesion evaluation | Initial bond strength (N/25 mm) | 259 | 280 | 275 | 271 | 232 | 257 | 286 | 240 | 263 |
| | One-week-later bond strength (N/25 mm) | - | 252 | 268 | 260 | 246 | - | 248 | - | - |
| | Initial failure type | Rubber failure | Rubber failure | Rubber failure | Rubber failure | Rubber failure | Rubber failure | Rubber failure | Rubber failure | Rubber failure |
| | One-week-later failure type | - | Rubber failure | Rubber failure | Rubber failure | Rubber failure | - | Rubber failure | - | - |

(*1) PYRATEX (manufactured by NIPPON A&L INC.)

(*2) Asahi Kasei SB latex L-7532 (manufactured by Asahi Kasei Corporation)

(*3) DM-6400 (manufactured by Meisei Chemical Works, Ltd.)

(*4) SUMILINK 100 (manufactured by Sumitomo Chemical Co., Ltd.)

(*5) SUMILINK 200 (manufactured by Sumitomo Chemical Co., Ltd.)

(*6) SUMIKANOL (manufactured by Sumitomo Chemical Co., Ltd.)

(*7) SEPOLEX CSM (manufactured by Sumitomo Seika Chemicals Co., Ltd.)

(*8) FB80 (manufactured by Denka Company Limited)

[Table 4]

| | | Comparative Example 1 |
|---|---|---|
| Components of water-based treatment agent and total amount (parts by mass) | SBVP latex (Solids: 42 mass%) (*1) | 70.0 |
| | SBR latex (Solids: 49 mass%) (*2) | 30.0 |
| | Blocked isocyanate (Solids: 42 mass%) (*3) | - |
| | Compound A (*4) | - |
| | Compound B (*5) | - |
| | RF condensate (*6) | 50 |
| | Water | 5.0 |
| | Total amount | 155 |
| Compound A + compound B with respect to 100 parts by mass of solids in rubber latex | | - |
| Material of filament in rubber-reinforcing cord | | Glass fiber |
| Deposit ratio of first coating (mass%) | | 14.3 |
| Adhesion evaluation | Initial bond strength (N/25 mm) | 256 |
| | One-week-later bond strength (N/25 mm) | 272 |
| | Initial failure type | Rubber failure |

(*1) PYRATEX (manufactured by NIPPON A&L INC.)

(*2) Asahi Kasei SB latex L-7532 (manufactured by Asahi Kasei Corporation)

(*3) DM-6400 (manufactured by Meisei Chemical Works, Ltd.)

(*4) SUMILINK 100 (manufactured by Sumitomo Chemical Co., Ltd.)

(*5) SUMILINK 200 (manufactured by Sumitomo Chemical Co., Ltd.)

(*6) SUMIKANOL (manufactured by Sumitomo Chemical Co., Ltd.)

[Table 5]

| | | Example 22 | Example 23 | Example 24 | Example 25 |
|---|---|---|---|---|---|
| Components of water-based treatment agent and total amount (parts by mass) | SBVP latex (Solids: 42 mass%) (*1) | 70.0 | 70.0 | 70.0 | 70.0 |
| | SBR latex (Solids: 49 mass%) (*2) | 30.0 | 30.0 | 30.0 | 30.0 |
| | Blocked isocyanate (Solids: 42 mass%) (*3) | 15.0 | 7.5 | 2.0 | - |
| | Compound A (*4) | - | - | - | - |
| | Compound B (*5) | 2.0 | 1.0 | 1.0 | 1.0 |
| | RF condensate (*6) | - | - | - | - |
| | Water | 63.0 | 71.5 | 77.0 | 79.0 |
| | Total amount | 180 | 180 | 180 | 180 |
| Compound A + compound B with respect to 100 parts by mass of solids in rubber latex | | 4.5 | 2.3 | 2.3 | 2.3 |
| Material of filament in rubber-reinforcing cord | | Aramid fiber | Aramid fiber | Aramid fiber | Aramid fiber |
| Deposit ratio of first coating (mass%) | | 24.1 | 23.1 | 17.9 | 14.4 |
| Adhesion evaluation | Initial bond strength (N/25 mm) | 255 | 250 | 214 | 211 |
| | One-week-later bond strength (N/25 mm) | 248 | 253 | 234 | 222 |
| | Initial failure type | Rubber failure | Rubber failure | Rubber failure | Rubber failure |
| | One-week-later failure type | Rubber failure | Rubber failure | Rubber failure | Rubber failure |

(*1) PYRATEX (manufactured by NIPPON A&L INC.)

(*2) Asahi Kasei SB latex L-7532 (manufactured by Asahi Kasei Corporation)

(*3) DM-6400 (manufactured by Meisei Chemical Works, Ltd.)

(*4) SUMILINK 100 (manufactured by Sumitomo Chemical Co., Ltd.)

(*5) SUMILINK 200 (manufactured by Sumitomo Chemical Co., Ltd.)

(*6) SUMIKANOL (manufactured by Sumitomo Chemical Co., Ltd.)

[Table 6]

| | | Example | | | |
|---|---|---|---|---|---|
| | | 26 | 27 | 28 | 29 |
| Components of water-based treatment agent and total amount (parts by mass) | SBVP latex (Solids: 42 mass%) (*1) | 70.0 | 70.0 | 70.0 | 70.0 |
| | SBR latex (Solids: 49 mass%) (*2) | 30.0 | - | 30.0 | - |
| | CSM latex (Solids: 40 mass%) (*7) | - | 37.0 | - | 37.0 |
| | Blocked isocyanate (Solids: 42 mass%) (*3) | - | - | - | - |
| | Compound A (*4) | 0.5 | 0.5 | - | - |
| | Compound B (*5) | - | - | 0.5 | 0.5 |
| | RF condensate (*6) | - | - | - | - |
| | Water | 49.5 | 42.5 | 49.5 | 42.5 |
| | Total amount | 150 | 150 | 150 | 150 |
| Compound A + compound B with respect to 100 parts by mass of solids in rubber latex | | 1.1 | 1.1 | 1.1 | 1.1 |
| Material of filament | | Glass fiber | Glass fiber | Glass fiber | Glass fiber |
| Deposit ratio of first coating (mass%) | | 17.3 | 15.3 | 17.4 | 16.5 |
| Material of second coating (*9) | | Halogen-containing-polymer adhesive | | | |
| Deposit ratio of second coating (mass%) | | 3.1 | 5.1 | 2.4 | 4.0 |
| Adhesion evaluation | Initial bond strength (N/25 mm) | 316 | 307 | 306 | 296 |
| | Initial failure type | Rubber failure | Rubber failure | Rubber failure | Rubber failure |

(*1) PYRATEX (manufactured by NIPPON A&L INC.)

(*2) Asahi Kasei SB latex L-7532 (manufactured by Asahi Kasei Corporation)

(*3) DM-6400 (manufactured by Meisei Chemical Works, Ltd.)

(*4) SUMILINK 100 (manufactured by Sumitomo Chemical Co., Ltd.)

(*5) SUMILINK 200 (manufactured by Sumitomo Chemical Co., Ltd.)

(*6) SUMIKANOL (manufactured by Sumitomo Chemical Co., Ltd.)

(*7) SEPOLEX CSM (manufactured by Sumitomo Seika Chemicals Co., Ltd.)

(*9) Chemlok 233 (manufactured by LORD Corporation)

[Table7]

| Component | Parts by mass |
|---|---|
| Chloroprene rubber | 100 |
| Carbon black | 40 |
| Zinc oxide | 5 |
| Stearic acid | 0.5 |
| Sulfur | 0.4 |

(continued)

| Component | Parts by mass |
|---|---|
| Vulcanization accelerator | 2.5 |
| Anti-aging agent | 1.5 |

[Table 8]

| Component | Parts by mass |
|---|---|
| Hydrogenated nitrile rubber (*10) | 100 |
| Carbon black | 40 |
| Zinc oxide | 5 |
| Stearic acid | 1 |
| Thiokol (TP-95) | 5 |
| Sulfur | 0.5 |
| Tetramethyl thiuram disulfide | 1.5 |
| Cyclohexyl benzothiazyl sulfenamide | 1 |
| (*10) Zetpol 2020 (manufactured by Zeon Corporation) | |

The rubber-reinforcing cords of Examples 1 to 21 and Comparative Example 1 in which glass fiber filaments were used for the filament bundles are compared. The coatings of the rubber-reinforcing cords of Examples 1 to 21 were produced using the water-based treatment agents free of resorcinol-formaldehyde condensates, and include no resorcinol-formaldehyde condensates. In spite of that, the rubber-reinforcing cords of Examples 1 to 21 are able to achieve an excellent adhesion comparable to that of the rubber-reinforcing cord of Comparative Example 1 including the coating including a resorcinol-formaldehyde condensate. Additionally, according to the results for Examples 22 to 25, even when the filament bundles including aramid fiber filaments instead of glass fiber filaments are used, the rubber-reinforcing cords having an excellent adhesion can be obtained owing to the coating produced using the water-based treatment agent of the present invention. As described above, since including the rubber latex and at least one selected from the group consisting of the compound A and the compound B, the water-based treatment agent of the present invention can achieve, without a resorcinol-formaldehyde condensate, adhesion comparable to those achieved by conventional treatment agents. That is, according to the present invention, a rubber-reinforcing cord having an excellent adhesion can be provided through a production process imposing only a small environmental load.

The rubber-reinforcing cords of Examples 26 to 29 in which the filament bundles include glass fiber filaments and which include the second coating as well as the first coating exhibited an excellent adhesion, as shown in Table 6, to the matrix rubber including hydrogenated nitrile rubber.

INDUSTRIAL APPLICABILITY

The present invention can be applied to rubber-reinforcing members for reinforcing rubber products.

## Claims

1. A water-based treatment agent for producing a coating of a rubber-reinforcing member, the water-based treatment agent comprising:

   a rubber latex; and
   at least one selected from the group consisting of a compound A represented by the following formula (1) and a compound B represented by the following formula (2):

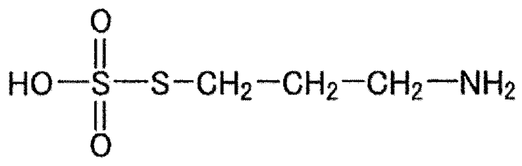

……(1)

;

and

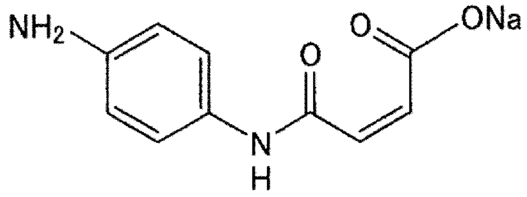

……(2)

2. The water-based treatment agent according to claim 1, wherein a sum of the compound A and the compound B is 15 parts by mass or less with respect to 100 parts by mass of solids included in the rubber latex.

3. The water-based treatment agent according to claim 1 or 2, further comprising a crosslinking agent.

4. The water-based treatment agent according to any one of claims 1 to 3, being free of a resorcinol-formaldehyde condensate.

5. The water-based treatment agent according to any one of claims 1 to 4, wherein the rubber latex is a latex of at least one rubber selected from the group consisting of styrene-butadiene copolymer, dicarboxylated butadiene-styrene polymer, styrene-butadiene-vinylpyridine terpolymer, chloroprene rubber, butadiene rubber, chlorosulfonated polyethylene, nitrile rubber, hydrogenated nitrile rubber, carboxyl-modified nitrile rubber, and carboxyl-modified hydrogenated nitrile rubber.

6. A method for producing rubber-reinforcing members, the method comprising

(a) forming a first coating on a surface of a reinforcing base by providing the water-based treatment agent according to any one of claims 1 to 5 to at least a portion of the surface of the reinforcing base and drying the water-based treatment agent.

7. The production method according to claim 6, wherein

the reinforcing base is a filament bundle,
the production method further comprises
(b) producing at least one of the filament bundles by assembling a plurality of filaments, and
in the step (a), a strand including the filament bundle and the first coating on the surface of the filament bundle is produced by providing the water-based treatment agent to at least the portion of the surface of the filament bundle and drying the water-based treatment agent.

8. The production method according to claim 7, further comprising twisting a plurality of the strands together.

9. The production method according to claim 6, wherein

the reinforcing base is a fiber sheet, and
in the step (a), the first coating is formed on the fiber sheet by providing the water-based treatment agent to at least the portion of the surface of the fiber sheet and drying the water-based treatment agent.

10. The production method according to any one of claims 6 to 9, wherein the water-based treatment agent is provided to at least the portion of the surface of the reinforcing base such that a mass of the first coating is 5 mass% or more and 35 mass% or less of a mass of the reinforcing base.

**11.** The production method according to claim 10, wherein the water-based treatment agent is provided to at least the portion of the surface of the reinforcing base such that the mass of the first coating is 10 mass% or more of the mass of the reinforcing base.

**12.** The production method according to claim 11, wherein the water-based treatment agent is provided to at least the portion of the surface of the reinforcing base such that the mass of the first coating is 10 mass% or more and 20 mass% or less of the mass of the reinforcing base.

**13.** The production method according to any one of claims 6 to 12, further comprising
(c) forming a second coating by providing a halogen-containing-polymer adhesive to the reinforcing base on which the first coating is formed and drying the halogen-containing-polymer adhesive.

**14.** A rubber-reinforcing member for reinforcing rubber products, the rubber-reinforcing member comprising:

a reinforcing base; and
a first coating placed to cover at least a portion of a surface of the reinforcing base, wherein
the first coating includes a rubber component and at least one selected from the group consisting of a compound A represented by the following formula (1) and a compound B represented by the following formula (2):

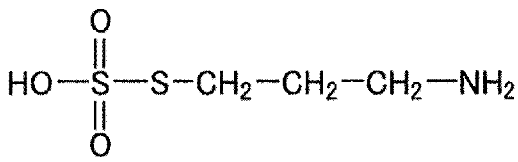

……(1)

;

and

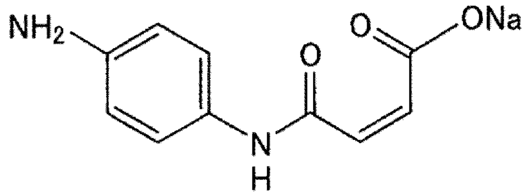

……(2)

**15.** The rubber-reinforcing member according to claim 14, wherein

the rubber-reinforcing member is a rubber-reinforcing cord,
the rubber-reinforcing cord includes at least one strand, and
the strand includes: at least one filament bundle being the reinforcing base; and the first coating placed to cover at least the portion of the surface of the filament bundle.

**16.** The rubber-reinforcing member according to claim 14, wherein

the rubber-reinforcing member is a rubber-reinforcing sheet, and
the rubber-reinforcing sheet includes a fiber sheet being the reinforcing base and the first coating formed on the fiber sheet.

**17.** The rubber-reinforcing member according to any one of claims 14 to 16, wherein
in the first coating, a sum of the compound A and the compound B is 15 parts by mass or less with respect to 100 parts by mass of the rubber component.

**18.** The rubber-reinforcing member according to any one of claims 14 to 17, wherein the first coating further comprises a crosslinking agent.

**19.** The rubber-reinforcing member according to any one of claims 14 to 18, wherein the first coating is free of a resorcinol-formaldehyde condensate.

**20.** The rubber-reinforcing member according to any one of claims 14 to 19, wherein a mass of the first coating is 5 mass% or more and 35 mass% or less of a mass of the reinforcing base.

**21.** The rubber-reinforcing member according to claim 20, wherein the mass of the first coating is 10 mass% or more of the mass of the reinforcing base.

**22.** The rubber-reinforcing member according to claim 21, wherein the mass of the first coating is 10 mass% or more and 20 mass% or less of the mass of the reinforcing base.

**23.** The rubber-reinforcing member according to any one of claims 14 to 22, wherein the rubber component is at least one selected from the group consisting of styrene-butadiene copolymer, dicarboxylated butadiene-styrene polymer, styrene-butadiene-vinylpyridine terpolymer, chloroprene rubber, butadiene rubber, chlorosulfonated polyethylene, nitrile rubber, hydrogenated nitrile rubber, carboxyl-modified nitrile rubber, and carboxyl-modified hydrogenated nitrile rubber.

**24.** The rubber-reinforcing member according to any one of claims 12 to 23, further comprising a second coating placed on the first coating, wherein
the second coating includes a halogen-containing-polymer adhesive.

**25.** A rubber product comprising:

a matrix rubber; and
the rubber-reinforcing member according to any one of claims 14 to 24.

**26.** The rubber product according to claim 25, wherein

the rubber-reinforcing member is a rubber-reinforcing cord, and
the rubber-reinforcing cord is embedded in the matrix rubber.

**27.** The rubber product according to claim 25 or 26, wherein the matrix rubber includes at least one selected from the group consisting of chloroprene rubber, nitrile rubber, hydrogenated nitrile rubber, carboxyl-modified nitrile rubber, and carboxyl-modified hydrogenated nitrile rubber.

**28.** The rubber product according to claim 27, wherein

the rubber-reinforcing member is the rubber-reinforcing member according to claim 24, and
the matrix rubber includes at least one selected from the group consisting of nitrile rubber, hydrogenated nitrile rubber, carboxyl-modified nitrile rubber, and carboxyl-modified hydrogenated nitrile rubber.

**29.** The rubber product according to any one of claims 25 to 28, wherein the rubber product is a rubber belt.

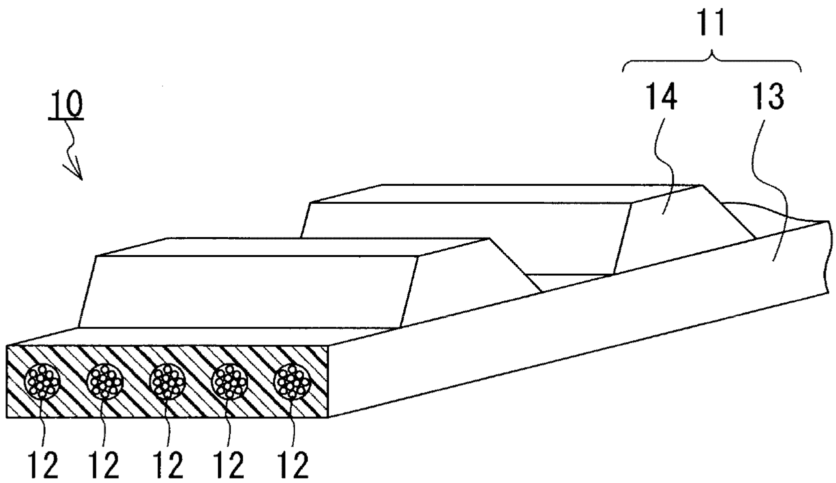


FIG.1A

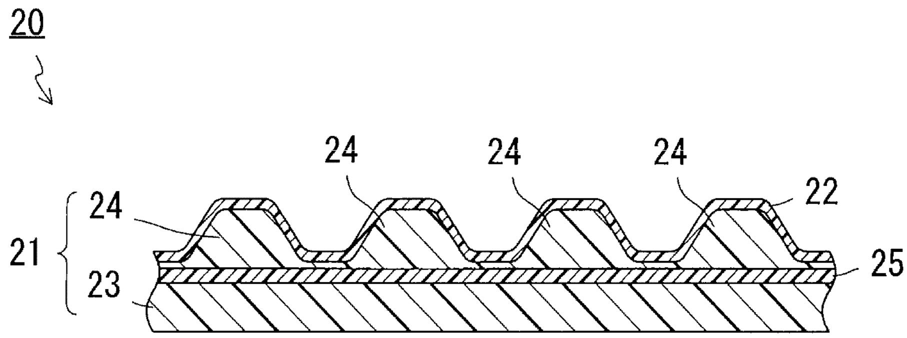


FIG.1B

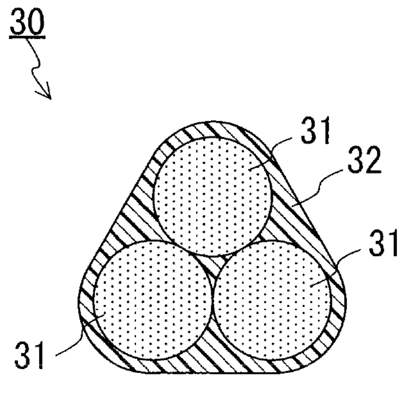


FIG.2

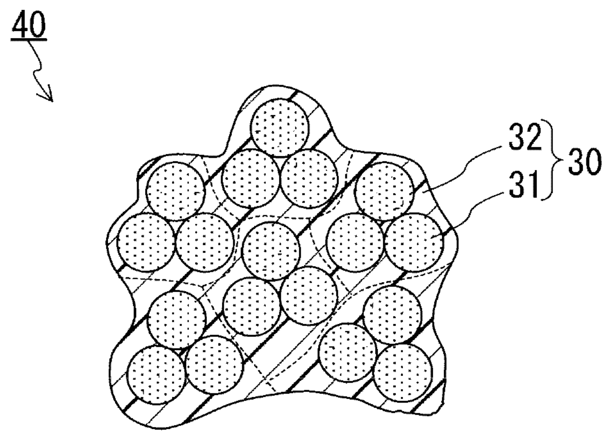


FIG.3

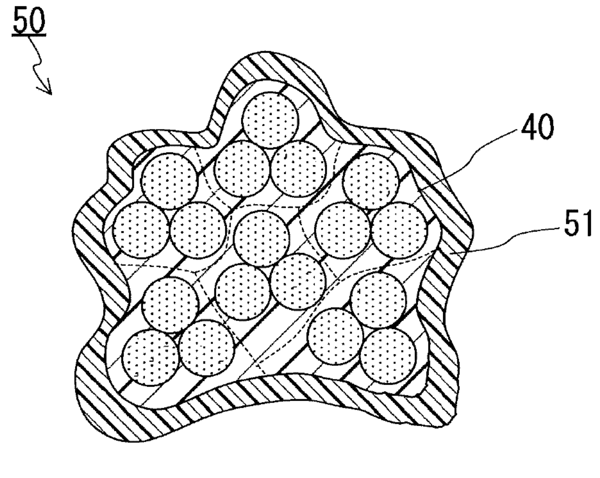


FIG.4

**INTERNATIONAL SEARCH REPORT**

International application No. **PCT/JP2023/011671**

**A. CLASSIFICATION OF SUBJECT MATTER**

***D06M 13/335***(2006.01)i; ***D02G 3/44***(2006.01)i; ***D06M 13/328***(2006.01)i; ***D06M 13/395***(2006.01)i; ***D06M 15/693***(2006.01)i
FI: D06M13/335; D02G3/44; D06M13/328; D06M13/395; D06M15/693

According to International Patent Classification (IPC) or to both national classification and IPC

**B. FIELDS SEARCHED**

Minimum documentation searched (classification system followed by classification symbols)

D06M13/335; D02G3/44; D06M13/328; D06M13/395; D06M15/693

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| A | WO 2020/026657 A1 (SUMITOMO RIKO CO., LTD.) 06 February 2020 (2020-02-06)<br>entire text | 1-29 |
| A | 能島士貴ら. ゴム／フィラー用カップリング剤SUMILINK(R)100/200の特徴とその用途について. 日本ゴム協会誌. 15 August 2020, vol. 93, no. 6, pp. 207-214, (NOJIMA, Shiki et al. Properties and Applications of Rubber/Filler Coupling Agents SUMILINK®100/200. Journal of the Society of Rubber Science and Technology, Japan.)<br>entire text | 1-29 |
| A | JP 47-11315 A (PPG INDUSTRIES INC.) 05 June 1972 (1972-06-05)<br>entire text | 1-29 |
| A | JP 2017-43671 A (THE YOKOHAMA RUBBER CO., LTD.) 02 March 2017 (2017-03-02)<br>entire text, all drawings | 1-29 |
| A | US 2020/0399498 A1 (THE GOODYEAR TIRE & RUBBER COMPANY) 24 December 2020 (2020-12-24)<br>entire text, all drawings | 1-29 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **07 June 2023** | **20 June 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2023/011671**

| Patent document cited in search report | Publication date (day/month/year) | Patent family member(s) | Publication date (day/month/year) |
|---|---|---|---|
| WO 2020/026657 A1 | 06 February 2020 | (Family: none) | |
| JP 47-11315 A | 05 June 1972 | (Family: none) | |
| JP 2017-43671 A | 02 March 2017 | (Family: none) | |
| US 2020/0399498 A1 | 24 December 2020 | EP 3753978 A1<br>entire text, all drawings | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012067412 A
- JP 2004183121 A
- JP 2006144932 A